Europäisches Patentamt

European Patent Office

Office européen des brevets

(11) Publication number: **0 134 626**
**B1**

## (12) EUROPEAN PATENT SPECIFICATION

(45) Date of publication of patent specification: **11.11.87**

(21) Application number: **84303848.0**

(22) Date of filing: **07.06.84**

(51) Int. Cl.⁴: **G 01 V 5/10, G 01 V 5/12**

(54) Determination of casing thickness using a gain stabilized gamma ray spectroscopy technique.

(30) Priority: **13.06.83 US 504015**

(43) Date of publication of application:
**20.03.85 Bulletin 85/12**

(45) Publication of the grant of the patent:
**11.11.87 Bulletin 87/46**

(84) Designated Contracting States:
**AT DE FR GB IT NL SE**

(56) References cited:
**US-A-3 752 984**
**US-A-3 767 921**
**US-A-3 864 569**
**US-A-4 053 767**
**US-A-4 297 575**

(73) Proprietor: **HALLIBURTON COMPANY**
**P.O. Drawer 1431**
**Duncan Oklahoma 73536 (US)**

(72) Inventor: **Smith, Harry Davis, Jr.**
**1731 Valley Vista Drive**
**Houston Texas 77042 (US)**
Inventor: **Robbins, Carl Arthur**
**15642 Camino Del Sol**
**Houston Texas 77042 (US)**

(74) Representative: **Wain, Christopher Paul et al**
**A.A. THORNTON & CO. Northumberland House**
**303-306 High Holborn**
**London WC1V 7LE (GB)**

EP 0 134 626 B1

Courier Press, Leamington Spa, England.

## Description

The present invention is concerned generally with detecting gamma radiation scattered from earth formations penetrated by a well borehole having a casing placed therein, and more particularly with measuring casing thickness, or equivalently, weight per unit length of the casing: it also locates collars, perforations and other variations in casing thickness or weight.

In recent years, gamma ray spectoroscopy of earth formations adjacent to a well borehole has been enhanced by highly stable scintillation detectors. They are normally mounted in a sonde which is lowered in a well borehole. They produce a pulse height spectrum proportional to the gamma ray energy spectrum of the gamma rays impinging on the scintillation crystal.

Gamma radiation is emitted from a radiation source in the logging tool and is focussed or collimated into the formation where it is scattered from the formation and borehole materials to impinge on a scintillation crystal carried a spaced distance longitudinally along the tool in the well borehole. Photoelectric absorption, Compton scattering, and pair production attentuate the radiation between its source generation in the tool and its detection in the crystal.

In our U.S.—A—4297575, we have described a well logging system which is capable of simultaneous measurements on the formation bulk density behind casing in a cased wellbore and the casing thickness of the casing in the cased wellbore. A downhole well logging instrument or sonde is provided which contains a gamma ray source and two gamma ray detectors spaced longitudinally at different distances from the gamma ray source. Measurements of the count rate at each of the gamma ray detectors are made while passing the downhole logging instruments through a well borehole. By appropriately combining the count rates of the gamma rays scattered by the casing and earth formation materials into each of the two detectors according to predetermined relationships, measurements may be made of the earth formation compensated bulk density and the thickness of the casing in the vicinity of the gamma ray source and detectors. Simultaneous graphical plots or well logs of the formation bulk density, casing thickness and other parameters of interest are recorded as a function of borehole depth.

We have now found, however, that casing thickness can be determined using only a single gamma ray detector (if desired), by dividing the detected gamma ray spectrum into gamma ray intensities measured into two energy bands, of which one band includes the energy at which absorption in iron is significant, and the other band does not include the iron absorption energy, so that from the two bands an output can be obtained indicative of casing thickness. The invention thus includes such a method and also apparatus for determining the thickness of casing in a well borehole, which comprises

a) gamma ray detector means adapted to be lowered in a borebole having a casing therein; and

b) a radiation for bombarding the formation beyond the casing with gamma radiation to be scattered and detected by said gamma ray detector means, said detector being responsive to gamma radiation of energy levels ranging from zero up to in excess of the energy of the source; characterised by:

c) pulse forming means cooperative with said detector means for forming an observed gamma ray spectrum as a function of energy level and pulse frequency at specified energy levels;

d) means defining high and low energy ranges wherein the low energy range is below approximately 175 KeV and the high energy range is primarily thereabove; and

e) means for receiving the pulse counts in the high and low energy ranges and for forming therefrom an output signal indicative of casing thickness.

U.S.-A-3864569 discloses a well logging method and apparatus in which a low energy gamma radiation detector is positioned in a sonde close to a gamma radiation source to measure borehole parameters, and a second low energy gamma radiation detector spaced further from the gamma ray source, measures borehole characteristics and the mineral composition of the formation. Signals are produced corresponding to different energy bands, but there is no appreciation of the idea of using such a technique for casing thickness determination in accordance with the present invention.

In the present invention, the gamma ray source is mounted in the apparatus and is approximately shielded to prevent direct communication of gamma rays to the longitudinally located gamma ray detector. One such source is $Co^{60}$, and another is $Cs^{137}$. These gamma ray source is gamma radiation having specific or characteristic energy levels which bombard the formation beyond the cased well. The radiation from the source impinges on the formation and is scattered outside the casing and back through the casing into the wellbore for detection by the detector. The gamma photons from the source in the tool primarily undergo photoelectric absorption and Compton scattering because the $Cs^{137}$ and $Co^{60}$ source energies are below that required for significant pair production.

The crust of the earth is a layered medium composed, in large part, of silicon, hydrogen, carbon, calcium, chlorine, oxygen and other relatively low atomic weight elements. The same elements are principally present in cement, mud, and borehole water or oil between the formation and detector. However, the iron in casing has a higher atomic number than virtually all of these other elements, and also attentuates the gamma radiation prior to its being detected. Further, significant photoelectric absorption in iron takes place at a higher energy level than in these other elements, and hence one can effectively isolate the attentuation due to iron from that due to other elements by using an energy dependent measurement of this photoelectric attenuation. These data are normalized and then provide a measurement of the amount of iron (and hence casing thickness) which is present in a well.

Virtually all producing wells are cased. At the time that a well is cased, the casing program may be readily available whereby nominal casing thickness can be determined. However, many wells, due to the changes in formation pressures as a function of depth, require several strings of different size casing to be incorporated into the drilling program. In drilling out below a depth to which casing has been set, it is possible that the casing may wear due to contact with the drill string used to drill out the deeper section in the well. This wear results in a decrease in casing thickness, which in turn weakens the casing. In many other instances, casing of a known thickness has been installed in a well but, after years of exposure to external deterioration caused by formation fluids, and internal deterioration due to produced fluids, corrosion may very well reduce the thickness, and hence strength, of the casing. in order to avoid casing collapse or blowouts, it is necessary to know the degree of wear or corrosion which has taken place, and to take remedial action if sufficient reduction in casing thickness has taken place. For these reasons, it is extremely valuable to be able to determine the thickness of the casing.

Photoelectric absorption is a gamma ray attentuation process whereby the gamma ray is completely removed in the interaction. The cross section, or probability, for photoelectric absoption ($\sigma$) is strongly affected by the energy E of the gamma ray and the atomic number, Z, of the element with which it interacts. This relationship is approximated by:

(1)
$$\sigma \sim \frac{Z^{4.}}{E^3}$$

Since iron has a higher Z (=26) than most earth formation elements, below a given energy level (about 150 KeV), iron dominates this absorption process. Above about 200 KeV, photoelectric absorption in iron, as well as other principal downhole elements is not significant. Hence if iron is present in the formation or borehole in the vicinity of the logging tool detector, then the count rate in the detector in the tool at energies below about 175 KeV is decreased relative to the count rate in a higher energy range in which photoelectric absorption is not significant. In addition, since iron has a higher Z than other elements in cement and borehole fluids, this relative attentuation increase in the lower energy range is virtually independent of changes in borehole geometry and composition. Changes in these variables will similarly influence count rates both below and above 175 KeV, as will changes in the density and lithology type of the formations.

Since casing thickness changes produce a pronounced relative count rate change (more than the other variations decribed above) in the very low energy region of the detected gamma spectrum, it is possible to isolate the effects of photoelectric absorption in iron. A ratio comparison of the summed counts in two energy ranges, one range which is sensitive to photoelectric absorption in iron, and a higher range in which photoelectric absorption in iron is neglible, varies with changes in iron thickness, but does not vary appreciably with changes in other downhole parameters. This ratio, when compensated for the geometric differences between casings of different sizes, can be used to directly indicate the thickness of the casing in the borehole.

The apparatus of the present invention preferably has a seed stabilizer source such as $Am^{241}$, $Cs^{137}$, or $Co^{60}$ to assure gain stability. These sources are positioned near the detector and emit known strength and energy photons to provide a known level for use in maintaining system gain. Data are meaningful only if the associated detector circuitary and amplifier circuitary are stable. This requires that a photon impinging on the detector be consistently amplified. Circuit drift is a problem, particularly compounded as the tool is exposed to ever increasing temperatures in deeper wells. When the logging tool is lowered into a very deep well, there is significant risk of temperature initiated drift. There is time based drift which also arises in the operation of such circuits. Furthermore, certain of the components are subject to ageing. Logging tools are exposed to a rugged environment and the physical shock normally encountered on lowering and retrieving a logging tool from a borehole also increases the possibility of drift. Clearly, the risk of signal drift creates a problem in obtaining accurate data. Of course, it will be recognized that other gain stabilisation methods could also be used to maintain constant gain. One example is a peak detector circuit to assure a calibration pulse height.

In the present invention, through the use of a scintillation detector and pulse height analyzer connected to the detector, gamma ray photons arriving at the detectors in two energy bands are detected and summed, and a ratio between the two is obtained. The ratio indicates thickness of intervening casing. For purposes of the present disclosure the gamma ray spectrum is divided into two energy bands, typically one being a low energy range of about 35 to about 120 KeV. The other is about 180—325 KeV, although the upper limit of 325 KeV can be higher or lower if desired. The two ranges are on opposite sides of an inflection point occurring at about 175 KeV which is the threshold energy for significant photoelectric absorption in iron. As the ratio varies, it indicates a variation in thickness, enabling a calibrated determination of casing thickness dependent on suitable scale and geometric factors employed. The procedure also detects casing collars and perforations in the casing.

Preferably, the source and detector are firmly decentralized and collimated directly out through the point at which the tool comes into contact with the casing. If this is not done, then some of the scattered gammas reaching the detector will never pass through the casing and hence will not have a scattered spectrum which reflects photoelectric absorption in passing through the casing. These gammas will tend to distort the casing thickness photoelectric absorption spectrum below 175 KeV. There is described hereafter a detector circuit for incorporation in the circuitry of the tool for the purpose of altering the gain of the circuitry to assure that the calibration of the system is fixed.

In order that the invention may be more fully understood, embodiments thereof will now be described, by way of example only, with reference to the accompanying drawings, wherein:

Fig. 1 is a schematic sectional view of a sonde in a well borehole penetrating earth formations and incorporating a collimated scintillation detector responsive to scattered source gamma radiation from a collimated source at the lower end thereof;

Fig. 2 shows three spectra of transmitted gamma rays for oxygen, silicon and iron as a function of the energy level of the gamma ray photons;

Fig. 3 is a graph of count ratio versus casing thickness; and

Fig. 4 is a schematic block diagram of a detector gain stabilization circuit for incorporation with a scintillation crystal detector and photomultiplier tube to assure that a photon of specified energy level provides a fixed amplitude output signal.

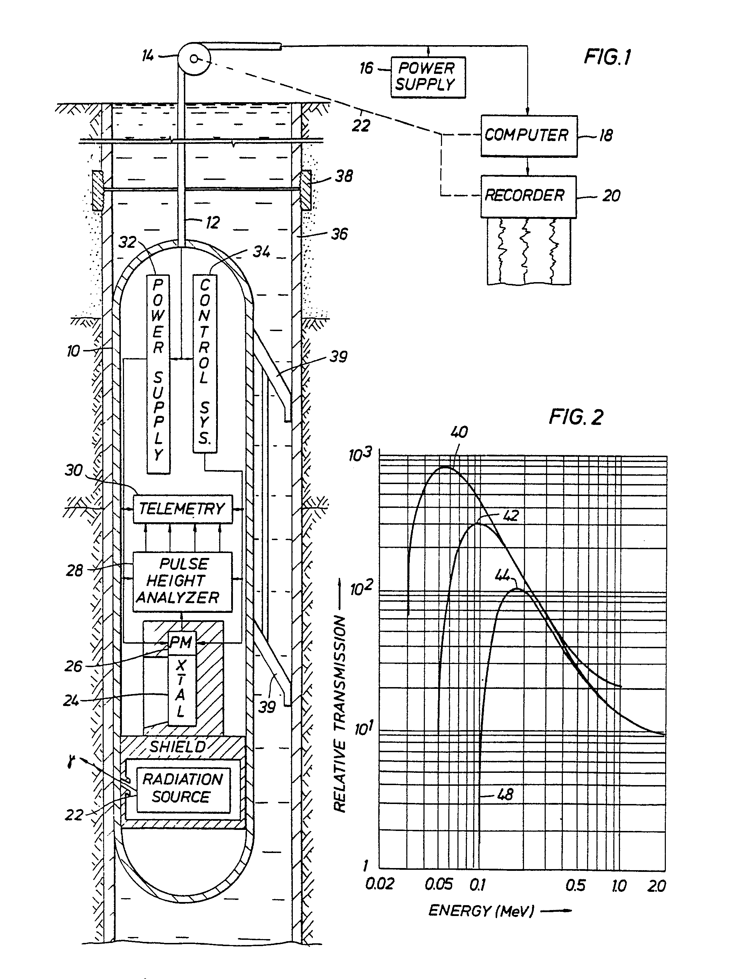

Attention is first directed of Fig. 1 of the drawings. A sonde 10 is suspended on a conventional multiconductor armored well logging cable 12. The logging cable 12 extends to the surface and passes over sheave wheel 14. The cable supports a number of conductors including a power supply system connected with a surface located power source 16. The logging cable 12 has conductors which are electrically coupled to a computer 18. The computer is connected to a recorder 20. In addition, the recorder 20 is mechanically or electrically connected with a sheave wheel 14 at 22 to transfer depth measurements of the sonde. The sonde 10 is lowered to the bottom of the well and a typical logging run progresses as the sonde, suspended on the logging cable, is raised from the well. As it is raised, the depth information is transmitted from the sheave wheel 14 to the recorder. This enables data to be recorded on some suitable record as a function of depth in the wellbore.

The sonde 10 supports the logging apparatus of this disclosure. The apparatus includes a scintillation crystal 24. As an example, one suitable crystal is manufactured by Harshaw Chemical Company and is a NaI (Thallium activated) crystal. It is connected to a photomultiplier 26, a suitable model being an EMR 543 photomultiplier. The photomultiplier forms electrical signals which are input to a pulse height analyser 28, which is connected with telemetry apparatus 30. The sonde also includes a power supply 32 and a suitable electronic control system 34. The sonde equipment is connected through the logging cable 12 to the surface equipment previously described. In ordinary operation, the sonde is decentralized and gammas are collimated directly into the casing. Centralized operation is· also feasible subject to interference counts from detected gammas which never penetrate the casing. The sonde housing in the vicinity of the detector 24 could be composed of steel, but preferably is a material with an equivalent atomic number less than that of the casing, such as a beryllium compound or a graphite fiber reinforced epoxy, which minimally attentuates low energy gamma rays. Collimating material, such as tungsten is used to collimate the source directly into the formation through the casing; it is also important, but not essential, that the detector also be collimated directly out through the low atomic number material where the tool-case contacts the casing. The sonde 10 is decentralized by a set of arms 39 to push the tool against the casing 36. More than one detector could be employed if desired. The arms 39 are opposite the collimated source, assuring the source gamma radiation will pass through the casing.

The sonde 10 is lowered into a cased wellbore. The casing 36 incorporates occasional collars at the end of each joint of the casing, and one such collar is indicated at 38. The casing 36 may be very uniform in thickness, or it may be corroded or worn and thereby reduced in thickness. Also, perforations may be formed in the casing.

The logging sonde 10 of Fig. 1 incorporates a radiation source 22. The radiation source is shielded so that it does not directly impinge on the detector crystal which is incorporated in the sonde 10. The radiation source 22 is also preferentially collimated to emit gamma radiation at a desired angle into the formation. The preferred radiation source is a gamma ray source such as $Cs_{137}$ ir $Co_{60}$. The source may be shielded to direct gamma radiation from the radiation source through the casing and into the formation adjacent to the borehole. The radiation source emits gamma photons of a characteristic energy level resulting from decay of the particular gamma ray source selected. The emitted gamma photons from the logging source undergo the same Compton scattering and photoelectric absorption processes on passing through the adjacent formations and the casings as do naturally occurring gamma photons from the formation emitted toward the detection crystal. Further, the scattering of the characteristic emission gamma photons provides a wide spectrum of energy levels in the received photons at detector 24. Recalling that the exemplary radiation sources above emit photons of a specified energy, the Compton scattering process scatters the photons over a wide spectrum so that the gamma ray spectrum below 325 KeV at the detector has more or less the same shape as the scattered spectrum from natural gammas. Natural radiation levels at the detector are generally much less intense than from the logging source, and hence are not significant in the measurement.

Referring now to Fig. 2 of the drawings, this graph shows the relative attentuation characteristics per unit mass of oxygen, silicon and iron to incident gamma radiation as a function of gamma ray energy. Fig. 2 is from "Energy Distribution of Scattered Gamma Rays in Natural Gamma Logging" by J. A. Czubek and A. Lenda, IAEA Nuclear Techniques & Mineral Resources Transactions, Buenos Aires, Argentina, 1968. Fig. 2 depicts the relative transmission spectra through the three elements. It assumes a gamma ray source within a homogeneous medium of the indicated material of infinite dimension, and the source is presumed to have the same strength in all spectra. The curve 40 is the relative transmission of oxygen (Z = 8). Oxygen is more transparent to low energy gamma rays, providing less attentuation than the other two elements. The curve 42 is the relative gamma ray transmission of silicon (z=14). The curve 44 sets out the gamma ray transmission characteristics of iron (z=26). At higher energy levels, the three curves show similar relative attentuation characteristics. This indicates that gamma radiation scattered from the earth formations are attentuated per unit mass more or less similarly by all three elements, which is a characteristic of Compton scattering, the dominant attentuation cross section in this energy range for these elements. Because of this similar relative attentuation at higher energies, the spectral shape of gamma rays reaching the detector will be minimally altered by changes in casing conditions, or changes in other downhole parameters. Of course, the absolute magnitudes of the count rates in these higher energy ranges can be altered by changes in borehole conditions, as well as to changes in the density of the formation. These density related changes could be incorporated into a simultaneous formation density measurement.

Referring further to Fig. 2 of the drawings, the attentuation for the three elements shown in Fig. 2 remains the same whether the radiation source is naturally occurring gamma radiation or is scattered radiation from the source 22 affixed to the tool in the well. In the latter instance, the radiation is originally emitted at specific energy levels. For instance, the $Cs_{137}$ isotope emits gamma radiation having an energy level of 662 KeV. Alternatively, $Co_{60}$ decay results photons having 1173 KeV and 1332 KeV energies. Whatever the original emission, it is absorbed and scattered and is distributed over a spectrum ranging from the original energy level downwardly so that the source scattered spectrum at the detector is essentially a continous spectrum for the purposes of the invention.

Below about 200 KeV, the relative transmission curve of iron decreases sharply to the curved portion 48. This response indicates quite high attentuation for iron to low energy photons. The attentuation is extreme at low energy levels. This is especially true in the range from about 35 to 120 KeV. Casing in the well borehole will thus effectively prevent low energy photons from arriving at the scintillation crystal 24.

At an energy level of about 20 KeV, attentuation by the casing is substantially total. Between 20 KeV and 175 KeV, very significant differences in the three spectra indicate the effects of changing casing thickness. Above about 150—200 KeV, the spectra have much more similar spectral shapes, with only minor differences due to the degree of Compton downscattering. This similar shape extends up to and beyond a selected the upper energy range (350 KeV). From Fig. 2, it can be seen that a ratio of count rates in a range below about 175 KeV to the count rate in a range above 175 KeV is strongly affected by casing thickness.

As will be understood, the two windows described above are utilized in the preferred forms of the present invention for radiation scattered from the radiation source 22 incorporated with the tool. Fig. 2 remains appplicable should there be a resolvable energy band within the spectrum shown; however, scattering, generally distributes the photons in a wide range across the entire spectrum at the detector. The count rate in the energy ranges 35—120 KeV to count rate in the energy range 180—325 KeV is the preferred range, although the upper limit (325 KeV) could be extended to include the entire Compton scattered gamma spectrum from the source.

Assume, in actual logging operations that a sonde is lowered to the bottom of a well in the manner set forth in Fig. 1. At a borehole depth of interest, the equipment is operated to obtain from the borehole measurement system from the scattered gamma ray energy spectrum wherein the spectrum is divided into two energy response bands or windows. Suitable windows are exemplified above, and they are on opposite sides of approximately 175 KeV. The two energy response bands or windows are preferably approximately the same for naturally occurring gamma radiation or scattered gamma radiation initiated by the radiation source 22.

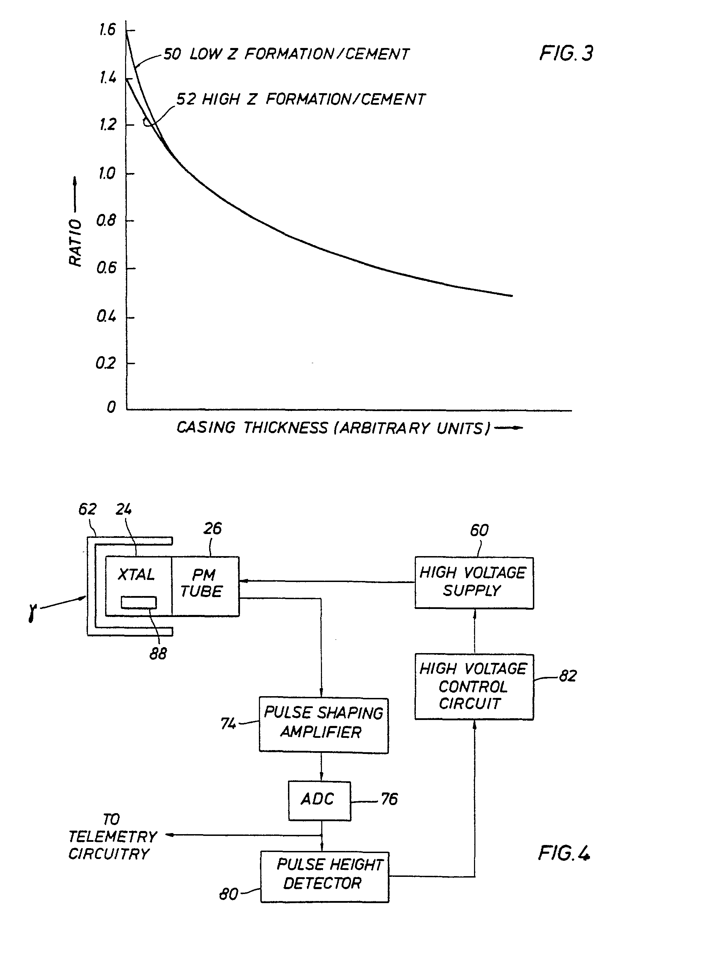

The scintillation detector is exposed to the scattered gamma rays from the source 22 at the depth of interest for a specified interval. During this time, the counts in two energy bands are summed counting from some starting instant, the ratio formed and then compared to a calibrated ratio curve similar the one shown in Fig. 3 to obtain a relative indication of casing thickness. It is particularly important to note that the count ratio in the two energy windows is considered, not the absolute count or count rate. The energy windows cover the spectrum at which scattered gamma radiation from the source 22 is detected. Because the ratio is formed and measurements in both energy ranges from the scattered gamma rays, the source strength is normalized by taking the ratio. Because of this, the source strength is not critical and can be increased to improve the count rate and thereby increase the logging speed. This ratio normalization also minimizes fluctuations in count rates from formation scatter, thickness of the cement (if any) around the casing, formation density, variations in lithology, changes in borehole fluid, dwell time of the tool at the particular depth, and leaves thickness of the casing as the primary variable. Generally speaking, the ratio that is obtained from the measurements described in the method of this invention remains fairly consistent without regard to background or naturally occurring gamma ray source type (potassium, uranium or thorium). This is because (1) the natural gamma count rates at the detector are very low, and (2) the scattered natural gamma spectrum in the energy range of interest has a very similar shape to that from the logging source at the detector. The ratio, except for extremely thin casing sections, is also virtually independent of the cement and formation lithology outside the casing, since photoelectric absorption in these materials is usually not significant relative to that of iron. If the formation or cement contains significant concentrations of high atomic number elements, it may be necessary to compensate the observed ratio for these effects. Also, if the casing is extremely thin, it may be necessary to apply corrections for the effects of atomic number caused by the formation or cement, which are illustrated in Fig. 3 by the differences between curves 50 and 52.

Ratio readings are taken as a function of depth in the well. As the sonde 10 is raised in the well, the thickness of the casing can be obtained from the measured ratios. It may be necessary to apply a small correction for nominal casing diameter because of geometrical differences in how the tool case contacts casing with different ratii of curvature. The surface computer 18 (Fig. 1) is programmed to compute the casing thickness from the ratio and a mathematical approximation to calibrated ratio versus thickness curves such as those in Fig. 3. Changes in the ratio indicate a change in casing thickness. Assume that the sonde 10 is raised until it is adjacent a casing collar 38 shown in Fig. 1. The coupling reduces the low energy transmission and thereby alters the ratio. Assume that the casing has been placed in well borehole, for many years. When installed, it had a known thickness. However, it has been exposed to corrosion and is thereby thinned. The casing thickness monitor of this invention is especially useful in detecting weakened casing sections. Detection of perforations is also possible. Casing wear, resulting from drilling or workover operations, can also be detected.

As shown in Fig. 1 of the drawings, a primarily gamma scintillation crystal detector 24 is incorporated. The crystal 24 is indicated in Fig. 1 of the drawings immediately adjacent to a photomultiplier tube 26. In Fig. 4, the photomultiplier 26 is powered by a photomultiplier high voltage supply 60. A control signal is input to this voltage supply. As the voltage is changed, the amplification factor of the photomultiplier tube 26 is also changed. The scintillation crystal detector is positioned immediately adjacent to an optically opaque thin screen or housing 62. The housing is constructed to prevent light from impinging on the crystal detector 24.

The photomultiplier 26 is connected to an amplifier 74. It shapes and amplifies the pulses from the photomultiplier 26. Such pulses are applied to an analog to digital converter 76. The digitized pulses are then input to a pulse height detector circuit 80 which tests for amplitude. Characteristic gamma rays photons of a specified height are repetitively observed with a seed source such as $Co_{60}$ or $Cs_{137}$. Preferably, the seed source 88 is implanted next to the detector crystal. Since seed sources such as these have higher energy than the scattered spectrum from the formation, they are isolated from the remaining spectrum and can easily be used for gain stabilisation. These pulses have a fixed or constant amplitude after signal processing. The pulses are output to a high voltage control circuit 82 which in turn forms a signal for the photomultiplier high voltage supply 60 to increase or decrease the voltage supplied to the photomultiplier. If the circuit 82 observes that pulse height is proper, by matching a predetermined level, no change is made. Otherwise, feedback is provided to the high voltage supply 60 to change the gain of the photomultiplier tube and thereby bring the pulse amplitude to a required level.

Consider one example of operation. Assume that the $Cs_{137}$ gamma photon (662 KeV) pulse from the stabilized seed source is digitized and has an amplitude of 100 arbitrary units. If the control circuit 82 is provided with a signal from the detector 80, it is then tested to assure that pulse height measures 100 units. If it does, no change is made. If the pulse height does not, a change is made and is implemented by altering the high voltage supply 60. This then assures that the digitized pulse height from the anolog to digital converter 76 is input to the telemetry circuitry. The pulse train output from the telemetry circuit 30 provides the proper signals to the surface for further signal processing.

An enhanced mode of circuit stabilization is to implant a low energy seed source 88 in the crystal 24. The source is selected to emit a gamma photon of specific energy. One source is $Am_{241}$ as an example. The source 88 emits a characteristic photon which is detected by the crystal 24 to form a pulse. The pulse is quantified in the ADC and tested for signal amplitude. If the pulse amplitude is the required value, then the amplification of the circuit is proper. If not, adjustments are made in the high volatage supply to obtain the correct amplitude.

If count ratios from any seed source are in a spectral region of interest, it may be necessary to correct the observed count rate for the known rate from the seed source prior to utilisation of data from that spectral region.

## Claims

1. A method of gamma ray spectral logging of a well borehole to determine the casing thickness of a cased well borehole, substantially independently of borehole conditions, which comprises the steps of:

a) bombarding the formation beyond the casing with gamma radiation from a source (22) carried by a logging tool (10) to create scattered gamma rays; and

b) measuring by a detector (24) in the logging tool the energy spectrum of gamma rays from outside the casing (36) in the vicinity of the well borehole at a specified depth in the borehole; characterised in that: said gamma ray spectrum is divided into gamma ray intensities measured in two energy bands; and wherein gamma ray count rate data in one energy band in which photoelectric absorption in iron is significant are combined with the gamma ray count rate data in one energy band where photoelectric absorption in iron is not significant, to form an output indicative of casing thickness; and determining the thickness of the casing at the specified depth in the well borehole from said output.

2. A method as claimed in claim 1, characterized in that the two energy bands are respectively above and below a level at which photoelectric absorption per unit mass in iron and silicon become approximately equal for increasing energy levels.

3. A method as claimed in claim 1 or 2, characterized in that the two energy bands are are primarily respectively above and below approximately 175 KeV.

4. A method as claimed in claim 3, characterized in that the two energy bands encompasses the range 35—120 KeV and the other band encompasses the range of 180—325 KeV.

5. A method as claimed in any preceding claim, characterised in that said combining step forms a ratio of count rates in the two energy bands.

6. A method as claimed in any preceding claim, characterised in that said logging tool (10) is decentralised and said gamma radiation source (22) is collimated out through the casing (36) in the area where the tool contacts the casing.

7. A method as claimed in any preceding claim, characterised in that said logging tool (10) is decentralized and said detector (24) is collimated out through the casing in the area where the tool contacts the casing.

8. A method of claim 7, characterised in that said logging tool contact area is a material with an atomic number less than that of the casing.

9. An apparatus for determining the thickness of casing in a well borehole, which comprises

a) gamma ray detector means (24) adapted to be lowered in a borehole having a casing (36) therein; and

b) a radiation source (22) for bombarding the formation beyond the casing with gamma radiation to be scattered and detected by said gamma ray detector means, said detector being responsive to gamma radiation of energy levels ranging from zero up to in excess of the energy source (22); characterised by:

c) pulse forming means cooperative with said detector means for forming observed gamma ray spectrum as a function of energy levels and pulse frequency at specified energy levels.

d) means defining high and low energy ranges wherein the low energy range is below approximately 175 KeV and the high energy range is primarily thereabove; and

e) means for receiving the pulse counts in the high and low energy ranges and for forming therefrom an output signal indicative of casing thickness.

## Patentansprüche

1. Verfahren zur Vermessung eines Bohrloches mittels Gammastrahlen — Spektroskopie zur Bestimmung der Verrohrungsdicke eines verrohrten Förderbohrloches im wesentlichen unabhängig von Bohrlochzuständen, mit den Verfahrensschritten:

(a) Bombardieren der Formation jenseits der Verrohrung mit Gammastrahlung von einer Strahlungsquelle (12), die in einem Vermessungsgerät (10) sitzt zur Erzeugung gestreuter Gammastrahlen; und

(b) Messen des Energiespektrums der Gammastrahlen von außerhalb der Verrohrung (36) in der Nähe des Förderbohrloches in einer definierten Tiefe in dem Bohrloch mittels eines Detektors (24) in dem Vermessungsgerät; dadurch gekennzeichnet, daß das besagte Gammaspektrum in Gammastrahlintensitäten unterteilt wird, die in zwei Energiebändern gemessen werden; und wobei Gammastrahl — Zählratendaten in einem Energieband, in welchem die photoelektrische Absorption in Eisen erheblich ist, mit den Gammastrahl — Zählratendaten in einem Energieband verknüpft werden, in welchem die photoelektrische Absorption in Eisen nicht erheblich ist, zur Bildung eines Ausanges, der ein Maß für die Verrohrungsdicke darstellt; und die Dicke der Verrohrung in einer definierten Tiefe in dem Förderbohrloch aus diesem Ausgang bestimmt wird.

2. Verfahren nach Anspruch 1, dadurch gekennzeichnet, daß die beiden Energiebanden oberhalb bzw. unterhalb eines Niveaus liegen, bei welchem die photoelektrische Absorption pro Masseeinheit in Eisen und Silizium bei ansteigenden Energieniveaus annähernd gleich werden.

3. Verfahren nach Anspruch 1 oder 2, dadurch gekennzeichnet, daß die beiden Energiebander hauptsächlich oberhalb bzw. unterhalb ungefähr 175 KeV liegen.

4. Verfahren nach Anspruch 3, dadurch gekennzeichnet, daß ein Energieband den Bereich von 35—120 KeV und das andere Energieband den Bereich von 180—325 Kev umfaßt.

5. Verfahren nach einem der vorhergehenden Ansprüche, dadurch gekennzeichnet, daß der Verknüpfungsschritt ein Verhältnis der Zählraten in den beiden Energiebändern bildet.

6. Verfahren nach einem der vorhergehenden Ansprüche, dadurch gekennzeichnet, daß das Vermessungsgerät (10) außermittig angeordnet ist und die Gammastrahlenquelle (22) in dem Bereich durch die Verrohrung (36) herausgerichtet ist, wo das Gerät an der Verrohrung anliegt.

7. Verfahren nach einem der vorhergehenden Ansprüche, dadurch gekennzeichnet, daß das Vermessungsgerät (10) außermittig angeordnet ist und der besagte Detektor (24) in dem Bereich durch die Verrohrung herausgerichtet ist, wo das Gerät an der Verrohrung anliegt.

8. Verfahren nach Anspruch 7, dadurch gekennzeichnet, daß die Kontaktfläche des Vermessungsgerätes ein Material mit einer geringeren Ordnungszahl als der des Gehäuses ist.

9. Gerät zu Bestimmung der Dicke der Verrohrung in einem Föderbohrloch, enthaltend

(a) Gammastrahlen — Detektormittel (24) die in ein mit einer Verrohrung (36) versehenes Bohrloch absenkbar sind;

(b) eine Strahlungsquelle (22) zum Bombardieren der Formation jenseits der Verrohrung mit Gammastrahlung, die zu streuen und von den besagten Gammastrahlen — Detektormitteln zu erfassen ist, wobei die besagten Detektormittel auf Gammastrahlung von Energieniveaus anspricht, die von null bis über die der Energiequelle (22) hinaus reichen;

gekennzeichnet durch

(c) impulsformende Mittel, die mit den besagten Detektormitteln zusammenwirken zur Bildung eines beobachteten Gammastrahlen — Spektrums als eine Funktion des Energieniveaus und der Impulsfrequenz bei definierten Energieniveaus;

(d) Mittel zur Festlegung von Bereichen hoher und niedriger Energie, wobei der Bereich niedriger Energie unterhalb ungefähr 175 KeV liegt und der Bereich hoher Energie hauptsächlich darüber liegt, und

(e) Mittel zum Empfangen der Impulszählungen in den Bereichen hoher und niedriger Energie und zur Bildung eines Ausgangssignals daraus, das ein Maß für die Verrohrungsdicke darstellt.

**Revendications**

1. Procédé de diagraphie spectrale par rayonnement gamma d'un puits de forage pour déterminer l'épaisseur du cuvelage d'un puits cuvelé, à peu près indépendamment de la nature du puits, comprenant les phases consistant à:

(a) bombarder la formation au-delà du cuvelage avec un rayonnement gamma en provenance d'une source (22) portée par un outil (10) de diagraphie pour créer un rayonnement gamma dispersé; et

(b) mesurer au moyen d'un détecteur (24) dans l'outil de diagraphie, le spectre d'énergie des rayons gamma provenant de l'extérieur du cuvelage (36) au voisinage du puits, à une profondeur spécifiée dans le puits, caractérisé en ce que ledit spectre du rayonnement gamma est divisé en intensités de rayonnement gamma mesurées dans deux bandes d'énergie, et en ce que les données de taux de comptage du rayonnement gamma dans une bande d'énergie dans laquelle l'absorption photoélectrique dans le fer est importante sont conbinées avec les données de taux de comptage du rayonnement gamma dans une bande d'énergie dans laquelle l'absorption photo-électrique dans le fer n'est pas importante, pour former une sortie indicative de l'épaisseur du cuvelage, et on détermine l'épaisseur du cuvelage à la profondeur spécifiée dans le puits à partir de ladite sortie.

2. Procédé suivant la revendication 1, caractérisé en ce que les deux bandes d'énergie sont respectivement au-dessus et au-dessous d'un niveau auquel l'absorption photoéletrique par unité de masse dans le fer et le silicium deviennent approximativement égales pour des niveaux d'énergie croissants.

3. Procédé suivant l'une ou l'autre des revendications 1 et 2, caractérisé en ce que les deux bandes d'énergie sont essentiellement respectivement au-dessus et au-dessous d'environ 175 KeV.

4. Procédé suivant la revendication 3, caractérisé en ce qu'une bande d'énergie englobe la plage de 35 à 120 KeV et l'autre bande d'énergie englobe la plage de 180 à 325 KeV.

5. Procédé suivant l'une quelconque des revendications précédentes, caractérisé en ce que ladite phase de combinaison forme un rapport des taux de comptage dans les deux bandes d'énergie.

6. Procédé suivant l'une quelconque des revendications précédentes, caractérisé en ce que ledit outil de diagraphie (10) est décentré et ladite source (22) de rayonnement gamma est collimatée à l'extérieur à travers le cuvelage (36) dans la région dans laquelle l'outil est en contact avec le cuvelage.

7. Procédé suivant l'une quelconque des revendications précédentes, caractérisé en ce que ledit outil de diagraphie (10) est décentré et ledit détecteur (24) est collimaté à l'extérieur à travers le cuvelage dans la region dans laquelle l'outil est en contact avec le cuvelage.

8. Procédé suivant la revendication 7, caractérisé en ce que ladite région de contact de l'outil de diagraphie est un matériau ayant un nombre atomique inférieur à celui du cuvelage.

9. Appareil pour déterminer l'épaisseur du cuvelage dans un puits de forage, qui comprend

(a) un dispositif détecteur (24) de rayons gamma adapté pour être des cendu dans un puits comportant un cuvelage (36), et

(b) une source (22) de rayonnement pour bombarder la formation au-delà du cuvelage avec un rayonnement gamma devant être dispersé et détecté par ledit dispositif détectuer de rayons gamma, ledit détecteur étant sensible au rayonnement gamma de niveau d'energie s'échelonnant de zéro jusqu'à plus que la source d'énergie (22), caractérisé en ce qu'il comprend

(c) un dispositif de formation d'impulsions coopérant avec ledit détecteur pour former un spectre de rayonnement gamma observé, en tant que fonction d'un niveau d'énergie et d'une fréquence d'impulsion à des niveaux spécifiés d'énergie,

(d) des moyens définissant des plages à haute et basse énergie où las plage à basse énergie est inférieure à environ 175 KeV et la plage à haute énergie est essentiellement au-dessus, et

(e) des moyens pour reçevoir les comptes d'impulsions dans les plages à haute et basse énergie et pour former à partir de ceux-ci un signal de sortie indicatif de l'épaisseur du cuvelage.

0 134 626

FIG.1

16 — POWER SUPPLY

COMPUTER — 18

RECORDER — 20

FIG. 2

1

FIG. 3

FIG. 4